# FASCICULE DE BREVET EUROPEEN

(11) **EP 3 561 282 B1**
(45) Date de publication et mention de la délivrance du brevet: **10.12.2025**
(21) Numéro de dépôt: 19169252.4
(22) Date de dépôt: 15.04.2019
(51) Int. Cl.: F02M 26/05, F16M 1/026, F02M 26/25, F02M 26/41, F01M 11/02, F01L 1/46, F01M 9/10, F02F 7/00

(54) **MOTEUR À COMBUSTION INTERNE AVEC PLAQUE DE FERMETURE D'UNE FACE DE DISTRIBUTION**
VERBRENNUNGSMOTOR MIT EINER VERSCHLUSSPLATTE EINER VERTEILUNGSSEITE
INTERNAL COMBUSTION ENGINE WITH PLATE FOR CLOSING A DISTRIBUTION SURFACE

(30) Priorité: 23.04.2018 FR 1853533
(43) Date de publication de la demande: 30.10.2019
(73) Titulaire: NEW H POWERTRAIN HOLDING, S.L.U., 47008 Valladolid (ES)
(72) Inventeur: MILLON, Jean-Pierre, 78870 BAILLY (FR); MARTINS, Acacio, 94500 CHAMPIGNY SUR MARNE (FR); GRATIAN, Jean-Louis, 95120 ERMONT (FR)
(74) Mandataire: Renault Group

(56) Documents cités:
- EP-A1- 2 077 387
- DE-A1- 102005 049 462
- US-A1- 2002 073 951
- US-A1- 2011 197 840
- US-A1- 2011 315 129
- US-A1- 2013 068 191

## Description

### Domaine technique de l'invention

La présente invention concerne un moteur à combustion interne comprenant une plaque de fermeture d'une face de distribution. L'invention concerne encore un véhicule comprenant un tel moteur à combustion interne.

### État de la technique

Un moteur à combustion interne, aussi bien à allumage commandé que Diesel, en particulier équipant un véhicule automobile, comprend généralement un système de recirculation de gaz d'échappement communément appelé EGR pour le terme anglo-saxon Exhaust Gas Recirculation. Un tel système EGR vise généralement à réduire les émissions polluantes et/ou à optimiser la puissance du moteur. Ce système EGR est généralement logé au niveau de la culasse du moteur à combustion interne. Il en résulte alors une culasse complexe et encombrante. Or le compartiment moteur d'un véhicule automobile est déjà fortement encombré par d'autres dispositifs.

La publication DE 10 2005 049462 A1 propose un conduit de gaz recirculés partie d'un couvercle de boitier de commande qui comprend une chambre de refroidissement traversée par ledit conduit.

Les documents US 201 1/315129 A1 et EP 2 077 387 A1 divulguent aussi un conduit de gaz recirculés ménagé dans une culasse ou sur une face d'une culasse d'un moteur thermique de véhicule automobile pour ramener lesdits gaz vers la face d'admission du moteur.

### Objet de l'invention

Le but de l'invention est de simplifier l'architecture d'un moteur à combustion interne et de remédier aux inconvénients ci-dessus.

Pour atteindre cet objectif, l'invention porte sur un moteur à combustion interne, à refroidissement liquide, notamment à allumage commandé ou Diesel, le moteur à combustion interne comprenant :
- un système de distribution s'étendant intégralement ou sensiblement intégralement au niveau d'une face de distribution du moteur à combustion interne,
- une plaque de fermeture recouvrant au moins partiellement la face de distribution,
- un dispositif de recirculation de gaz d'échappement, notamment de gaz d'échappement de recirculation haute pression,
la plaque de fermeture comprenant un premier conduit d'écoulement des gaz d'échappement de recirculation.

Le dispositif de recirculation de gaz d'échappement comprend une vanne EGR refroidie, agencée dans un premier logement ménagé dans la plaque de fermeture.

Le dispositif de recirculation de gaz d'échappement comprend une vanne bypass apte à diriger ou non les gaz d'échappement de recirculation vers un système de refroidissement, la vanne bypass étant agencée dans un deuxième logement ménagé dans la plaque de fermeture.

La plaque de fermeture comprend un deuxième conduit d'écoulement d'un liquide de refroidissement, notamment un deuxième conduit destiné à refroidir la vanne EGR refroidie et/ou la vanne bypass.

La plaque de fermeture peut comprendre un troisième conduit d'écoulement d'huile de lubrification d'un tel moteur.

La plaque de fermeture peut comprendre au moins un orifice, notamment un orifice obstrué par un bouchon, et/ou la plaque de fermeture peut comprendre une première ouverture, notamment une première ouverture obstruée au moins partiellement par une première paroi rapportée de sorte à créer au moins partiellement le premier conduit, et/ou la plaque de fermeture peut comprendre une deuxième ouverture, notamment une deuxième ouverture obstruée au moins partiellement par une deuxième paroi rapportée de sorte à créer au moins partiellement un deuxième conduit d'écoulement d'un liquide de refroidissement.

L'invention porte enfin sur un véhicule, notamment un véhicule automobile, comprenant un moteur à combustion interne tel que défini précédemment.

### Description sommaire des dessins

Ces objets, caractéristiques et avantages de la présente invention seront exposés en détail dans la description suivante d'un mode de réalisation de l'invention fait à titre non-limitatif en relation avec les figures jointes parmi lesquelles :
La figure 1 est une vue schématique d'un véhicule automobile selon un mode de réalisation de l'invention.
La figure 2 est une vue en perspective schématique en partie éclatée d'un moteur à combustion interne selon un mode de réalisation de l'invention.
La figure 3 est vue en perspective d'une plaque de fermeture de moteur à combustion interne selon un mode de réalisation de l'invention.
Les figures 4 et 5 sont d'autres vues en perspective de la plaque de fermeture selon le mode de réalisation de l'invention.
La figure 6 est une vue en perspective d'une première paroi rapportée et d'une deuxième paroi rapportée selon un mode de réalisation de l'invention.

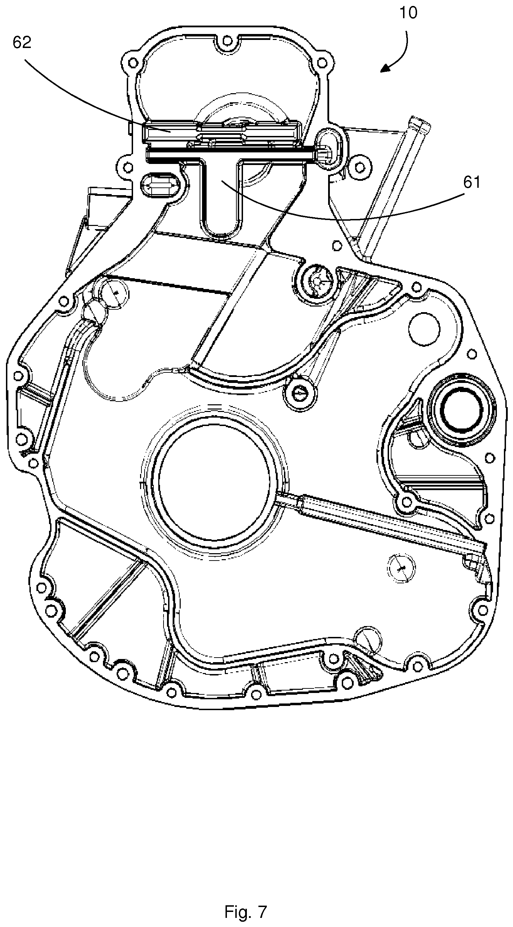

La figure 7 est une vue de face de la plaque de fermeture équipée de la première paroi rapportée et de la deuxième paroi rapportée selon le mode de réalisation de l'invention.

### Description du mode préféré de l'invention

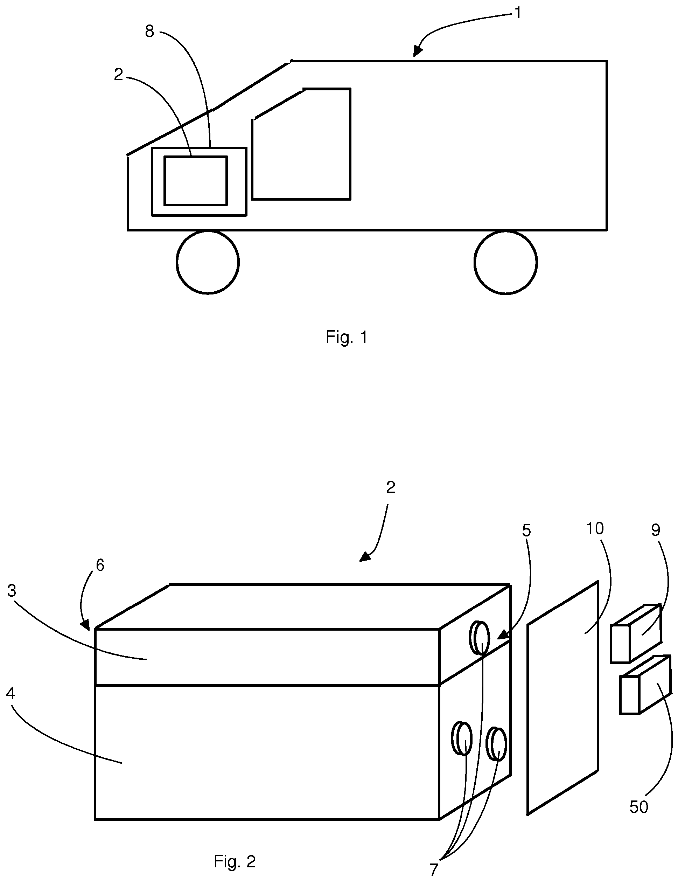

Un mode de réalisation d'un véhicule, par exemple un véhicule automobile 1, est illustré sur la figure 1. Le véhicule automobile 1 comprend un moteur à combustion interne 2 disposé au sein d'un compartiment moteur 8, par exemple placé à l'avant du véhicule automobile 1. Le véhicule automobile 1 dispose d'un groupe motopropulseur comprenant le moteur à combustion interne 2, ou de type hybride, c'est-à-dire doté du moteur à combustion interne 2 associé à un moteur électrique relié à une batterie de traction et/ou propulsion. Le moteur à combustion interne 2 est par exemple un moteur Diesel ou un moteur à allumage commandé à essence, de préférence doté d'un système à refroidissement liquide. Le moteur à combustion interne 2 comprend un dispositif de recirculation de gaz d'échappement appelé « EGR », par exemple haute pression.

Un mode de réalisation d'un moteur à combustion interne 2 est illustré sur la figure 2. Le moteur à combustion interne 2 comprend une culasse 3 et un bloc moteur 4. Le bloc moteur 4 peut comprendre notamment un cylindre ou davantage de cylindres. Généralement le bloc moteur 4 comprend plusieurs cylindres disposés les uns à côté des autres. Ainsi, au moins un cylindre jouxte une face de distribution 5 alors qu'un autre cylindre jouxte une face opposée 6 à la face de distribution 5. Le moteur comprend un système de distribution 7 doté par exemple de pignons coopérant avec une courroie ou une chaîne. Le système de distribution 7 est alors agencé, intégralement ou sensiblement intégralement, au niveau de la face de distribution 5. Le moteur 2 comprend également une plaque de fermeture 10 de type carter de distribution refermant ou coiffant la face de distribution 5. La plaque de fermeture 10 couvre en partie, intégralement ou sensiblement intégralement la face de distribution 5.

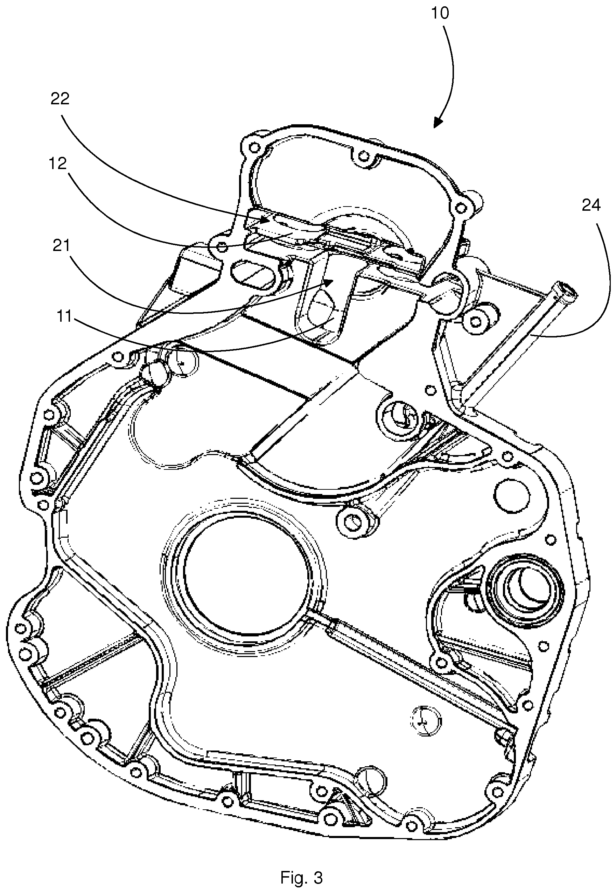

Comme illustré sur la figure 3, la plaque de fermeture 10 comprend un premier conduit 21. Ce premier conduit 21 assure, au moins en partie, l'écoulement des gaz d'échappement de recirculation, en particulier de gaz d'échappement de recirculation haute pression.

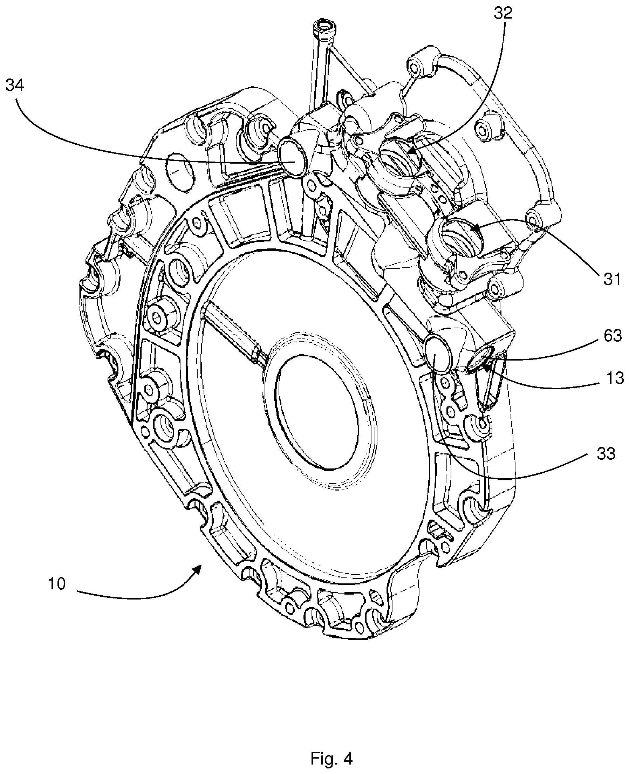

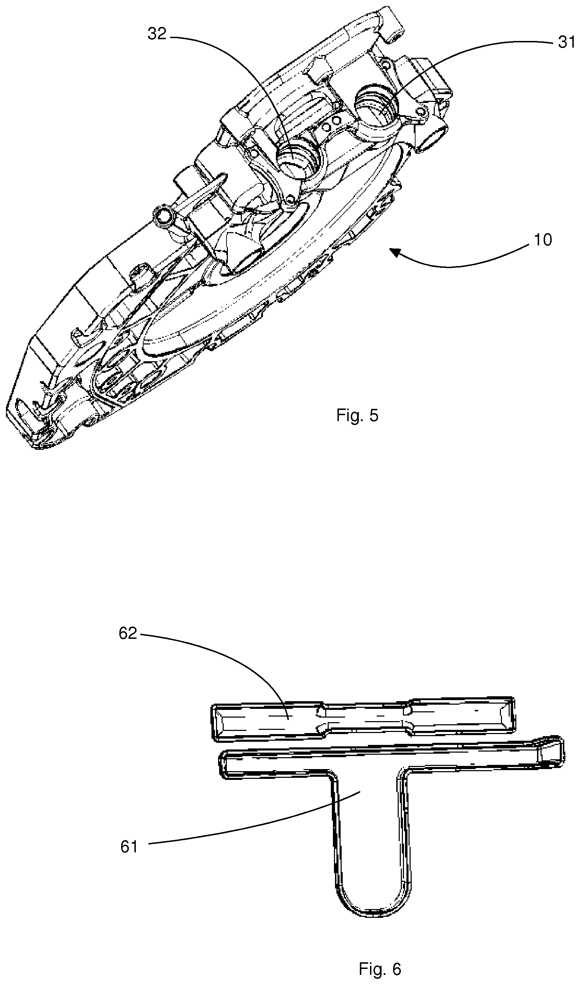

Comme illustré sur les figures 4 et 5, la plaque de fermeture 10 comprend un premier logement 31. Le premier logement 31 offre un emplacement pour une vanne de gestion du débit de gaz EGR, de préférence une vanne refroidie. Ainsi, le premier logement 31 offre un emplacement pour une vanne EGR refroidie, c'est-à-dire agencée à proximité d'un passage de liquide de refroidissement au sein de la plaque de fermeture 10, ou encore comprenant elle-même un conduit dans lequel circule, ou peut circuler, un liquide de refroidissement. En effet, un noyau peut être intégré directement dans la fabrication par fonderie de la plaque de fermeture 10 ou un noyau peut être intégré dans la fabrication par fonderie de la vanne.

Comme illustré sur les figures 4 et 5, la plaque de fermeture 10 comprend un deuxième logement 32. Le deuxième logement 32 offre un emplacement pour une vanne de gestion du by-pass de refroidissement des gaz (refroidi ou non), selon l'invention une vanne refroidie. Une telle vanne bypass permet de diriger les gaz d'échappement de recirculation vers un système de refroidissement 50 illustré sur la figure 2, ou de ne pas diriger les gaz vers ce système de refroidissement 50. Ce système de refroidissement 50 comprend de préférence un échangeur. Le système de refroidissement 50 est par exemple fixé directement, ou indirectement, sur la plaque de fermeture 10 ou encore fixé sur une autre partie du moteur à combustion interne 2. La plaque de fermeture 10 permet d'avoir une distribution lubrifiée à l'huile. La plaque de fermeture 10 permet le passage des gaz de façon plus simple. Il y a moins d'interface et de support, l'architecture est globalement plus simple.

Comme illustré sur la figure 3, la plaque de fermeture 10 comprend un deuxième conduit 22. Le deuxième conduit 22 assure, au moins en partie, l'écoulement d'un liquide de refroidissement. Selon l'invention, ce deuxième conduit 22 assure le refroidissement, au moins partiel, de la vanne EGR refroidie et/ou de la vanne bypass.

Comme illustré sur la figure 3, la plaque de fermeture 10 peut comprendre un troisième conduit 24. Le troisième conduit 24 est alors par exemple destiné à l'écoulement d'huile de lubrification du moteur 2.

Plus précisément, au moins un bouchon 63 est inséré dans au moins un orifice 13 comme illustré sur la figure 4. Un tel orifice 13 est par exemple ménagé pour faciliter la réalisation d'un conduit 33, par exemple par usinage. Un autre bouchon peut également être prévu en vue de la réalisation d'un conduit 34.

De préférence, le conduit 33 constitue une sortie des gaz d'échappement de recirculation depuis la plaque de fermeture 10 vers le système de refroidissement 50. De préférence, le conduit 34 constitue une entrée des gaz d'échappement de recirculation provenant du système de refroidissement 50 dans la plaque de fermeture 10. Ainsi, les gaz d'échappement de recirculation sortent « chauds » de la plaque de fermeture 10 par le conduit 33 et rentrent « refroidis » dans la plaque de fermeture 10 par le conduit 34.

En outre, une première ouverture 11 ou cavité est ménagée dans une face de la plaque de fermeture 10 destinée à se retrouver en vis-à-vis de la face de distribution 5 du moteur, comme illustrée sur la figure 3. Cette première ouverture 11 est alors ménagée dans l'épaisseur de la plaque de fermeture 10. Une première paroi rapportée 61 peut alors être agencée, en particulier à l'entrée de la première ouverture 11 de sorte à créer, au moins partiellement, le premier conduit 21.

Une deuxième ouverture 12 ou cavité est également ménagée dans la face de la plaque de fermeture 10 destinée à se retrouver en vis-à-vis de la face de distribution 5 du moteur, comme illustrée sur la figure 3. Cette deuxième ouverture 12 est alors ménagée dans l'épaisseur de la plaque de fermeture 10. Une deuxième paroi rapportée 62 peut alors être agencée, en particulier à l'entrée de la deuxième ouverture 12 de sorte à créer, au moins partiellement, le deuxième conduit 22.

En outre, la plaque de fermeture 10 peut être obtenue par un procédé comprenant une étape de fonderie sous pression, par exemple de fonderie sous pression avec noyau(x), et/ou au sable. Les première et deuxième parois rapportées 61, 62 peuvent être utilisées en cas de fabrication comprenant une coulée sous pression. Ce type de fabrication est économique. Dans ce cas, au moins un noyau interne, métallique de préférence, peut alors permettre la réalisation de plusieurs pièces.

Alternativement, en cas de procédé de fabrication faisant appel à des noyaux perdus, les première et deuxième parois rapportées 61, 62 peuvent être remplacées par des parois venues de matière en cours de fabrication.

La plaque de fermeture peut encore comprendre un quatrième conduit, en particulier un quatrième conduit de type retour de liquide de refroidissement. Ce quatrième conduit s'étend par exemple depuis, ou au niveau, d'une face échappement du moteur vers, ou jusqu'à, une pompe à eau. La plaque de fermeture peut comprendre un support destiné à supporter un capteur de Point Mort Haut et/ou un capteur de régime du moteur à combustion interne 2. La plaque de fermeture peut encore comprendre une sortie de liquide de refroidissement en direction d'un radiateur du moteur 2.

Une telle plaque de fermeture 10 d'une face de distribution 5 offre, en plus de sa fonction première qu'est la protection des salissures du système de distribution 7, une fonction pour le circuit de recirculation des gaz d'échappement. Il en résulte une simplification de la culasse. En effet, la fonction EGR étant intégrée, au moins en partie, au niveau de la plaque recouvrant la face de distribution 5, la culasse 3 se trouve simplifiée en étant dépourvue, au moins en partie, de système EGR. Les conduits qui auraient dû être intégrés dans la culasse sont supportés par la plaque de fermeture 10. La culasse 3 occupe alors un volume moindre engendrant un gain en volume de l'intégralité du moteur 2, autrement dit le rendant davantage compact. En outre, il en résulte une simplification en termes d'assemblage, en particulier d'assemblage du système EGR.

Cette solution permet l'intégration d'un refroidisseur d'air haute pression.

En remarque, la solution atteint donc l'objet recherché de limiter le volume d'un moteur à combustion interne équipé d'un système EGR destiné à être implanté dans un compartiment moteur fortement contraint en termes de volume, et présente les avantages complémentaires suivants :
- Elle peut être appliquée à tous moteurs dotés d'un système EGR, tels que par exemple moteurs Diesel ou essence à allumage commandé ;
- Elle peut équiper, outre les véhicules automobiles, des bateaux, des motocyclettes, des groupes électrogènes ou générateurs ;
- Elle offre une réduction des interfaces, diminution du nombre de vis, moins de trottoirs ou rebords d'étanchéité, engendrant un gain en masse et en termes d'emballage ou conditionnement.

L'invention est bien adaptée pour fermer un moteur à combustion interne côté distribution.

Selon un mode non couvert par l'invention, la plaque de fermeture peut être conçue de sorte à fermer une face opposée à la face côté distribution, par exemple une face accouplement.

## Revendications

1. Moteur à combustion interne (2), à refroidissement liquide, notamment à allumage commandé ou Diesel, le moteur à combustion interne (2) comprenant :
- un système de distribution (7) s'étendant intégralement ou sensiblement intégralement au niveau d'une face de distribution (5) du moteur à combustion interne (2),
- une plaque de fermeture (10) recouvrant la face de distribution (5),
- un dispositif de recirculation de gaz d'échappement (9), notamment de gaz d'échappement de recirculation haute pression, la plaque de fermeture (10) comprenant un premier conduit (21) d'écoulement des gaz d'échappement de recirculation, **caractérisé en ce que** :
- le dispositif de recirculation de gaz d'échappement (9) comprend :
une vanne EGR refroidie, agencée dans un premier logement (31) ménagé dans la plaque de fermeture (10) ; et, une vanne by-pass apte à diriger ou non les gaz d'échappement de recirculation vers un système de refroidissement (50), agencée dans un deuxième logement (32) ménagé dans la plaque de fermeture ;
,et **en ce que** :
La plaque de fermeture (10) comprend un deuxième conduit (22) d'écoulement d'un liquide de refroidissement, notamment un deuxième conduit (22) destiné à refroidir la vanne EGR refroidie et/ou la vanne by-pass.

2. Moteur à combustion interne (2) selon la revendication précédente, **caractérisé en ce que** la plaque de fermeture (10) comprend un troisième conduit (24) d'écoulement d'huile de lubrification d'un tel moteur (2).

3. Moteur à combustion interne (2) selon l'une des revendications précédentes, **caractérisé en ce que** la plaque de fermeture (10) comprend au moins un orifice (13), notamment un orifice (13) obstrué par un bouchon (63),
et/ou **en ce que** la plaque de fermeture (10) comprend une première ouverture (11), notamment une première ouverture (11) obstruée au moins partiellement par une première paroi rapportée (61) de sorte à créer au moins partiellement le premier conduit (21), et/ou **en ce que** la plaque de fermeture (10) comprend une deuxième ouverture (12), notamment une deuxième ouverture (12) obstruée au moins partiellement par une deuxième paroi rapportée (62) de sorte à créer au moins partiellement un deuxième conduit (22) d'écoulement d'un liquide de refroidissement.

4. Véhicule, notamment véhicule automobile (1), **caractérisé en ce qu'**il comprend un moteur à combustion interne (2) selon l'une des revendications précédentes.

## Patentansprüche

1. Flüssigkeitsgekühlter Verbrennungsmotor (2), insbesondere ein Otto- oder Dieselmotor, der Verbrennungsmotor (2) umfassend:
- ein Verteilersystem (7), das sich vollständig oder im Wesentlichen vollständig an einer Verteilerfläche (5) des Verbrennungsmotors (2) erstreckt,
- eine Verschlussplatte (10), die die Verteilerfläche (5) abdeckt,
- eine Abgasrückführvorrichtung (9), insbesondere für Hochdruckrückführabgas, die Verschlussplatte (10) umfassend eine erste Leitung (21) für den Rückführabgasfluss, **dadurch gekennzeichnet, dass:**
- die Abgasrückführvorrichtung (9) umfasst: ein gekühltes AGR-Ventil, das in einem ersten Gehäuse (31), das in der Verschlussplatte (10) vorgesehen ist, angeordnet ist; und ein Bypass-Ventil, das geeignet ist, die Rückführabgase zu einem Kühlsystem (50) zu leiten oder nicht, das in einem zweiten Gehäuse (32), das in der Verschlussplatte vorgesehen ist, angeordnet ist;
und dass:
die Verschlussplatte (10) eine zweite Leitung (22) für den Kühlmittelfluss, insbesondere eine zweite Leitung (22), die dafür bestimmt ist, das gekühlte AGR-Ventil und/oder das Bypass-Ventil zu kühlen, umfasst.

2. Verbrennungsmotor (2) nach dem vorstehenden Anspruch,
**dadurch gekennzeichnet, dass** die Verschlussplatte (10) eine dritte Leitung (24) für den Schmierölfluss von einem solchen Motor (2) umfasst.

3. Verbrennungsmotor (2) nach einem der vorstehenden Ansprüche, **dadurch gekennzeichnet, dass** die Verschlussplatte (10) mindestens eine Mündung (13), insbesondere eine durch einen Stopfen (63) verschlossene Mündung (13), umfasst,
und/oder dass die Verschlussplatte (10) eine erste Öffnung (11), insbesondere eine erste Öffnung (11), umfasst, die mindestens teilweise durch eine erste zusätzliche Wand (61) verschlossen ist, um mindestens teilweise die erste Leitung (21) zu bilden, und/oder dass die Verschlussplatte (10) eine zweite Öffnung (12), insbesondere eine zweite Öffnung (12), umfasst, die mindestens teilweise durch eine zweite zusätzliche Wand (62) verschlossen ist, um mindestens teilweise eine zweite Leitung (22) für den Kühlflüssigkeitsfluss zu bilden.

4. Fahrzeug, insbesondere ein Kraftfahrzeug (1),
**dadurch gekennzeichnet, dass** es einen Verbrennungsmotor (2) nach einem der vorstehenden Ansprüche umfasst.

## Claims

1. Liquid-cooled internal combustion engine (2), in particular a spark ignition or diesel internal combustion engine, the internal combustion engine (2) comprising:
- a distribution system (7) extending integrally or substantially integrally at a distribution face (5) of the internal combustion engine (2),
- a cover plate (10) covering the distribution face (5),
- an exhaust gas recirculation device (9), in particular for high-pressure recirculated exhaust gas, the cover plate (10) comprising a first flow duct (21) for the recirculated exhaust gases, **characterized in that:**
- the exhaust gas recirculation device (9) comprises: a cooled EGR valve, arranged in a first housing (31) provided in the cover plate (10); and, a by-pass valve capable of directing or not directing the recirculated exhaust gases to a cooling system (50), arranged in a second housing (32) provided in the cover plate;
and **in that**:
the cover plate (10) comprises a second coolant flow duct (22), in particular a second duct (22) for cooling the cooled EGR valve and/or the bypass valve.

2. Internal combustion engine (2) according to the preceding claim, **characterized in that** the cover plate (10) comprises a third lubricating oil flow duct (24) for such an engine (2).

3. Internal combustion engine (2) according to either of the preceding claims, **characterized in that** the cover plate (10) comprises at least one port (13), in particular a port (13) blocked by a plug (63),
**and/or in that** the cover plate (10) comprises a first opening (11), in particular a first opening (11) at least partially obstructed by a first wall (61), so as at least partially to create the first duct (21), **and/or in that** the cover plate (10) comprises a second opening (12), in particular a second opening (12) at least partially obstructed by a second wall (62), so as at least partially to create a second coolant flow duct (22).

4. Vehicle, in particular a motor vehicle (1), **characterized in that** it comprises an internal combustion engine (2) according to any of the preceding claims.
